# EUROPEAN PATENT SPECIFICATION

(11) **EP 0 671 811 B1**
(45) Date of publication and mention of the grant of the patent: **12.01.2000**
(21) Application number: 95108346.8
(22) Date of filing: 18.10.1991
(51) Int. Cl.: H02P 6/14, H02K 29/00, H02P 6/22

(54) **A controller for a brushless DC motor without a position sensor**
Regler für bürstenlosen Gleichstrommotor ohne Positionsgeber
Régulateur pour moteur à courant continu sans balais sans détecteur de position

(30) Priority: 19.10.1990 JP 28153690; 17.11.1990 JP 31230590; 17.11.1990 JP 31230690; 20.11.1990 JP 31545190; 20.11.1990 JP 31545290; 20.11.1990 JP 31546990; 21.06.1991 JP 15014491
(43) Date of publication of application: 13.09.1995
(62) Divisional of application: 91917807.9
(73) Proprietor: SEIKO EPSON CORPORATION, Tokyo 160-0811 (JP)
(72) Inventor: Nagate, Takashi, Suwa-shi, Nagano 392 (JP); Uetake, Akihito, Suwa-shi, Nagano 392 (JP); Koike, Yoshikazu, Suwa-shi, Nagano 392 (JP); Tabata, Kunio, Suwa-shi, Nagano 392 (JP)
(74) Representative: Ritter und Edler von Fischern, Bernhard, Dipl.-Ing.

(56) References cited:
- EP-A- 0 316 077
- WO-A-90/10973
- FR-A- 2 590 423
- GB-A- 2 198 537
- IEEE TRANSACTIONS ON INDUSTRIAL ELECTRONICS AND CONTROL, vol. IE-32, no. 3, August 1985 NEW YORK US, pages 215-222, P.P. ACARNLEY ET AL 'Detection of Rotor Position in Stepping and Switched Motors by Monitoring of Current Waveforms'
- CONF. RECORD OF THE IAS 25, vol. I, 12 October 1990 SEATTLE US, pages 443-447, S. OGASAWARA ET AL 'An Approach to Position Sensorless Drive for Brushless DC Motors'
- ANTRIEBSTECHNIK, vol. 27, no. 7, 1988 MAINZ DE, page 29 'Intelligent, verschleissfrei, betriebstemperaturunabhängig: Kollektorloser Gleichstrommotor ohne Lagesensor'

## Description

### Technical Field:

The present invention relates to a controller for a brushless DC motor without a position sensor utilizing a counter electromotive force generated in coils wound on a stator as a rotor is rotated to position-detect magnetic poles of the rotor, and more particularly to a brushless DC motor without position sensor having the rotor configured so that respective rotating magnetic pole surfaces oft he rotor come most closely adjacent to inner end surfaces of the stators's respective magnetic poles at predetermined circumferential points on the respective rotating magnetic pole surfaces and thereby positions of the rotor's respective poles. The controller serves for drive control of such a brushless DC motor without position sensor.

### Prior Art:

Recently, the brushless DC motor has been used in various apparatus and equipment in view of its high efficiency and controllability. The brushless DC motor has the substantially same construction as the synchronous motor, so the position detector such as the Hall element has been necessary to detect a position of the rotor in driving. However, the space occupied by such a position detector has become a serious problem with the progress of miniaturization and has come to the front as an important factor which obstructs a desired miniaturization of the motor. To solve such a problem, so-called position-sensorless, brushless DC motor has been developed recently and already been put in practical use.

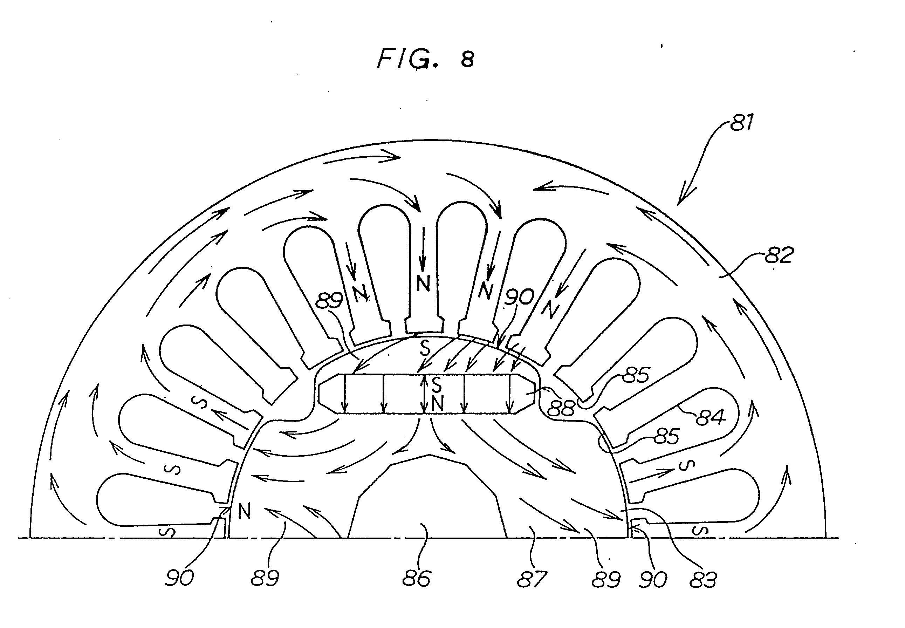

Fig. 8 is a fragmentary sectional view showing a conventional brushless DC motor without position sensor in an enlarged scale. Such a position-sensorless, brushless DC motor 81 of prior art comprises a stator 82 and a rotor 83. The stator 82 surrounds the rotor 83 rotatably supported by a rotatable shaft 86 and includes a plurality of stationary magnetic poles 84 projecting inward. The respective stationary magnetic poles 84 carry coils U, V, W (not shown) wound thereon. The stationary magnetic poles 84 are magnetized in a predetermined polarity as current flows through the coils U, V, W. Stationary magnetic pole surfaces 85 defined by the inner end surface of the respective stationary magnetic poles 84 lie at equal distances from the center of the rotatable shaft 86 along a cylindrical surface.

The rotor 83, on the other hand, comprises a yoke 87 formed from a plurality of silicon steel sheets laminated integrally and a pair of field permanent magnets 88. The yoke 87 is provided along its outer periphery with four rotating magnetic poles 89 projecting outward and these rotating magnetic poles 89 are alternately provided in their bases with the field permanent magnets 88 inserted therein with the N-poles of these magnets 88 being arranged face to face. Respective rotating magnetic pole surfaces 90 defined by the outer end surfaces of the respective rotating magnetic poles 89 lie at equal distances from the center of the rotatable shaft 86 so as to form curved surfaces, respectively, so that each rotating magnetic pole surface 90 is uniformly spaced from the confronting stationary magnetic pole surface 85 at every point on the rotating magnetic pole surface 90.

Under the effect of mutual repulsion occurring between the N-poles of the two permanent magnets 88, the magnetic flux generated by the rotor 83 exits from the yoke 87 via the rotating magnetic poles containing therein no field permanent magnet and enters again into the yoke 87 via the rotating magnetic poles containing therein the respective field permanent magnets as shown. Consequently, the rotating magnetic poles containing therein the respective permanent magnets are magnetized in S-polarity and the rotating magnetic poles containing therein no permanent magnets are magnetized in N-polarity.

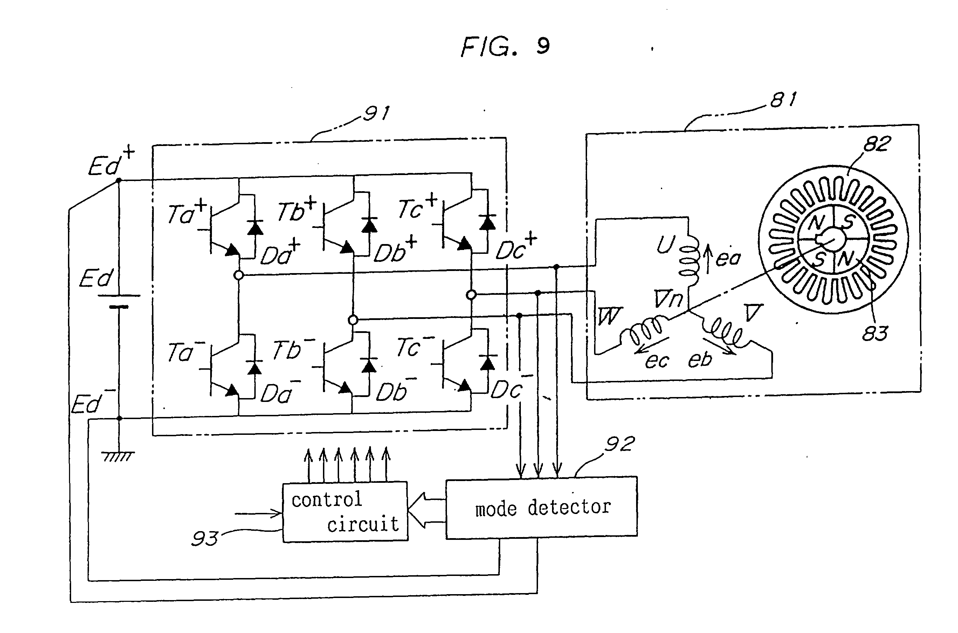

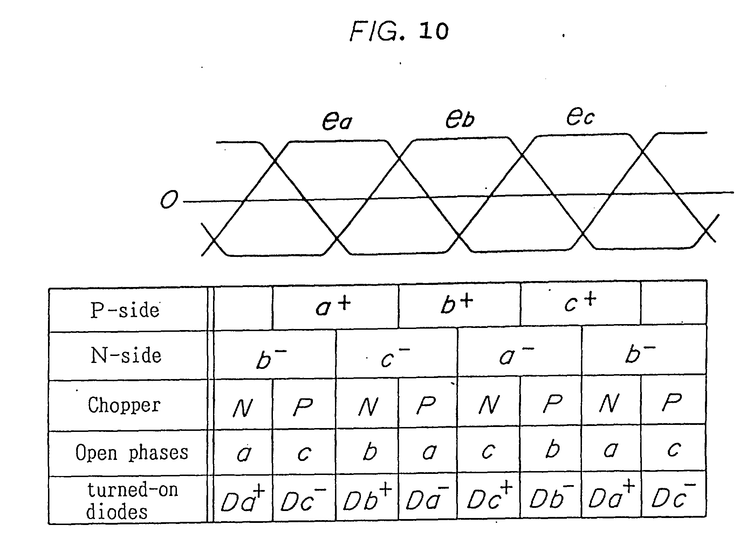

Recently, a driving method for the position-sensorless, brushless DC motor has been proposed, in which the counter electromotive force generated in the stator coils as the rotor rotates is utilized instead of relying on the position detector (Suzuki, Ogasawara, Akagi, Naniwae, Nagatake, Okuyama: "Construction of position-sensorless, brushless DC motor", reported in the 34th national meeting of JEC, Industrial Application Group, 1988). With such a driving method, as shown in Fig. 9, a 120° voltage feed type inverter 91 is used as the main circuit and RPM control is effected by a chopper control. Referring to Fig. 9, reference numeral 81 designates a motor, reference numeral 82 designates a stator, reference numeral 83 designates a rotor, symbols U, V, W designate stator coils of respective phases, symbols Ta⁺, Tb⁺, Tc⁺, Ta⁻, Tb⁻, Tc⁻ designate transistors, and symbols Da⁺, Db⁺, Dc⁺, Da⁻, Db⁻, Dc⁻ designate feedback diodes. According to this proposal, the counter electromotive forces eₐ, e_{b}, e_{c}, generated in the respective phases and the drive signal applied to a pair of transistors are trially obtained in the mutual relationship as illustrated in Fig. 10. The respective phases U, V, W have their open periods (i.e., a period for which the transistors are free from application of the drive signal) twice each for 60° during a period corresponding to an electrical angle of 360°. It should be understood here that the phase in the open state is referred to hereinafter as the open phase.

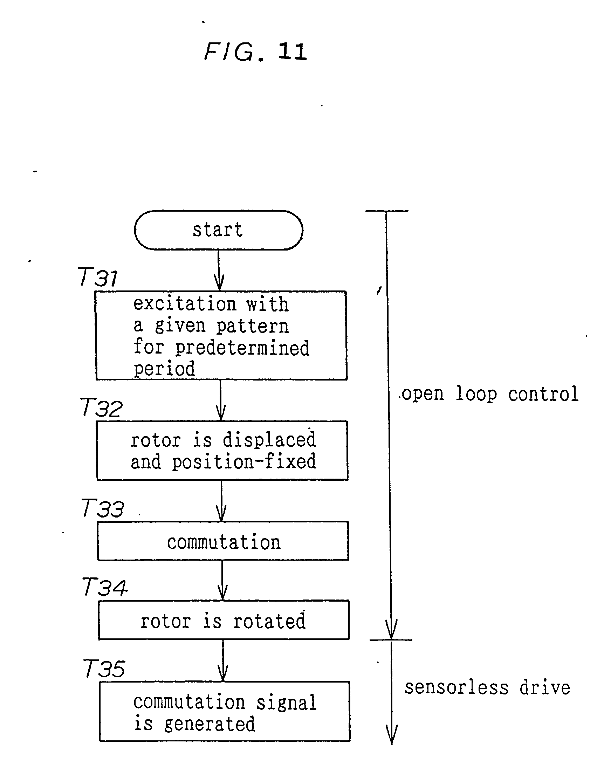

To drive the motor according to this driving method, a starting sequence as shown in Fig. 11 is followed. Initially, the motor is excited for a predetermined time with the drive signal of an optional excitation pattern (step T31) and thereby the rotor is displaced to the position corresponding to this excitation pattern (step T32). Then, the excitation pattern is changed over to the excitation pattern advanced by 120° (step T33) and thereby the motor is rotated (step T34). The counter electromotive force is generated in the stator coils as the motor is rotated. The rotating magnetic poles are indirectly position-detected by detecting the turned-on state of the feedback diodes associated with the open phases and thus the communication signal is generated (step T35). More specifically, rotation of the rotor causes the stator coils to generate the counter electromotive force which causes, in turn, the terminal voltage of each open phase to be varied. Consequently, anode potential of the P-side feedback diodes rises to a level higher than Ed⁺ or cathode potential of the N-side feedback diodes drops to a level lower than Ed⁻ and thus the feedback diodes are tuned on. Accordingly, the turned-on state of the diodes associated with the open phases may be detected to detect the current excitation pattern and, in consequence, positions of the rotating magnetic poles are detected. Practically, the mode detector 92 as shown in Fig. 27 detects the turned-on state of the respective diodes by comparing the reference voltage Ed with the terminal voltage of each diode.

The turned-on states of the diodes associated with the open phases are detected in the proximity of 30° during the open period of 60°. Namely, the turned-on state is detected at a leading phase of approximately 30°. Accordingly, the control circuit 93 generates the drive signal with delaying all the phases approximately 30°, respectively (such phase delaying is referred to as phase shift), to effect the next communication and utilizes this drive signal to perform the chopper control.

However, with this position-sensorless, brushless DC motor of prior art, the magnetic flux generated from the field permanent magnets tends to be concentrated at points on the respective rotating magnetic pole surfaces deviated from the circumferentially middle points thereon in the direction of rotation since the respective rotating magnetic pole surfaces are uniformly spaced from the respective stationary magnetic pole surfaces at every point on the respective rotating magnetic pole surfaces. As a result, the counter electromotive force generated by the magnetic flux will be prematurely detected with respect to the actual positions of the respective rotating magnetic poles and the stationary magnetic poles will be excited earlier than a predetermined timing, preventing the rotor from being smoothly rotated.

In the conventional position-sensorless, brushless DC motor having the yoke containing the permanent magnets inserted therein, the field permanent magnets usually have substantially rectangular cross-sections, respectively, and the outer magnetic pole surface of each field permanent magnet defines a relatively large surface. Such configuration also has contributed to the above-mentioned deviation of the magnetic flux.

The conventional rotor comprising the yoke and the field permanent magnets has encountered another problem concerning a strength of the yoke. More specifically, the field permanent magnets each having a rectangular cross-section which is slightly narrower than the associated rotating magnetic pole is inserted into the base of this rotating magnetic pole and, therefore, bridges of the yoke which connect the outer end to the base of each rotating magnetic pole containing therein the field permanent magnet have necessarily slender configuration.

With the driving method of prior art, if the counter electromotive force can be detected at first one communication based on the starting sequence, it will be determined that a normal starting has been achieved and a change-over will occur from the open loop to the sensorless running. Therefore, the rotor is inadequately position-held and vibrates, for example, when a load involves a torque fluctuation. Moreover, if next one communication is performed under a torque being generated in the reverse direction, the rotor is rotated from a position other than the desired position, so the counter electromotive force is detected prematurely by an electrical angle of 60° or 120° with respect to the actual position of the rotor and change-over to the sensorless running occurs, upon which a predetermined excitation pattern is output. However, the motor can not be normally started and often vibrates since this excitation pattern differs from the intrinsic excitation pattern depending on the actual position of the rotor. Even if the motor is vibrating, a signal representing the counter electromotive force is detected and, if this signal is higher than a level required for the sensorless running, the predetermined excitation pattern continues to be output. Consequently, both the normal starting and the restarting are impossible.

With the above-mentioned driving method, furthermore, the chopper frequency has had to be set, for a relatively wide rotation frequency range of the motor, so that the communication timing be free from any affection of the detection timing delay at the maximum rotation frequency. For example, an electrical angle of 60° corresponds to 0.5m/sec and, therefore, the chopper frequency is set to a level as high as in order of 10 kHz. However, such high chopper frequency disadvantageously results in an increased switching loss of the inverter and a significant heat generation from the inverter elements.

In addition, the above-mentioned driving method has encountered further another problem that the electric energy accumulated in the stator coils is emitted immediately after transfer from the energized state to the deenergized state and consequently a voltage appears in the open phase. The time period for which the electric energy is emitted depends on the value of current flowing through the stator coils and the load exerted on the motor. The motor is not rotated during emission of such electric energy, because no precise position information of the permanent magnet rotor can be obtained unless the detection of the counter electromotive force is inhibited.

Finally, the above-mentioned driving method is accompanied with further additional problem concerning the detection of the relative position of the stator coils and the permanent magnet rotor. More specifically, the counter electromotive force appearing in the stator coils being not fed thereinafter referred to as open phases) is detected and thereby the relative position of the stator coils and the permanent magnets is detected according to the driving method. However, if the counter electromotive force appearing in the open phases nonlinearly varies, no precise detection of the relative position will be achieved.

It is the object of the invention to provide a controller adapted, even when the motor can not be normally rotated, for example, due to a vibration in starting, to return to the start of an open loop, so an open loop control can be restarted to repeat the position fixation of the rotor until the normal rotation is achieved. This object is solved by claim 1. Further advantageous embodiments and improvements of the invention can be taken from the dependent claims.

Advantageously the controller according to the invention can change the clopper frequency continuously depending on the rotation frequency of the motor and thereby to minimize a switching loss of the inverter.

### Disclosure of the Invention:

An aspect of the invention can be seen a brushless DC motor without position sensor which can be controlled by the inventive controller. This motor comprises a stator fixed inside a motor frame and a rotor surrounded by the stator and rotatably supported by the motor frame through the aid of a rotatable shaft, the stator having a plurality of stationary magnetic poles projecting inward, inner end surfaces of the stationary magnet poles defining stationary magnetic pole surfaces lying substantially at equal distances from the rotatable shaft along a cylindrical surface, the rotor having a plurality of rotating magnetic poles projecting outward, outer end surfaces of the rotating magnetic poles defining rotating magnetic pole surfaces which are magnetized alternately in different polarities in the circumferential direction of the rotor and opposed to the stationary magnetic pole surfaces at a slight distance therefrom, wherein each of the rotating magnetic pole surfaces presents a curved surface swelling outward and is most closely adjacent to the corresponding stationary magnetic pole surface at a given circumferential point.

The rotor comprises a yoke and field permanent magnets, the yoke having an even number of rotating magnetic poles projecting radially outward, of which the bases are alternately provided with the field permanent magnets inserted thereinto in parallel to the rotatable shaft with the magnetic poles of the respective permanent magnets being opposed to the rotatable shaft, and opposite lateral sides of the respective magnets being slanted so that the respective magnets have their outer magnetic pole surfaces provided with relatively small surface areas.

According to the invention the controller for the brushless DC motor without position sensor utilizes turned-on states of feedback diodes, wherein the control system comprises an output pattern mode generator, a commutation timing signal generator and a coincidence detector serving to detect a coincidence of the signals generated from the output pattern mode generator and the commutation timing signal generator, respectively, wherein, when the output of the detector indicates no coincidence, a motor drive output is stopped once and then starting is repeated.

### Brief Description of the Drawings:

Fig. 1 is a circuit diagram showing circuit components of a brushless DC motor without position sensor such as an inverter including a control circuit 24 according to the invention;
Fig. 2 is a sectional view of the brushless DC motor without position sensor taken transversely of an axis thereof:
Fig. 3 is a block diagram of a control circuit in the embodiment of the invention;
Fig. 4 is a circuit diagram showing an example of a pattern coincidence detector:
Fig. 5 is a timing chart illustrating a mutual relationship of various signals appearing in the control circuit;
Fig. 6 is a diagram illustrating a mutual relationship of output pattern mode, excitation mode and commutation timing detection phase;
Fig. 7 is a flow chart of a starting sequence;
Fig. 8 is a sectional view showing a brushless DC motor without position sensor of prior art as halved;
Fig. 9 is a circuit diagram of an inverter used in a motor of prior art;
Fig. 10 is a diagram illustrating a relationship between counter electromotive force and driving signal in a motor of prior art; and
Fig. 11 is a flow chart illustrating a starting sequence for a motor of prior art.

### Preferred Embodiments of the Invention:

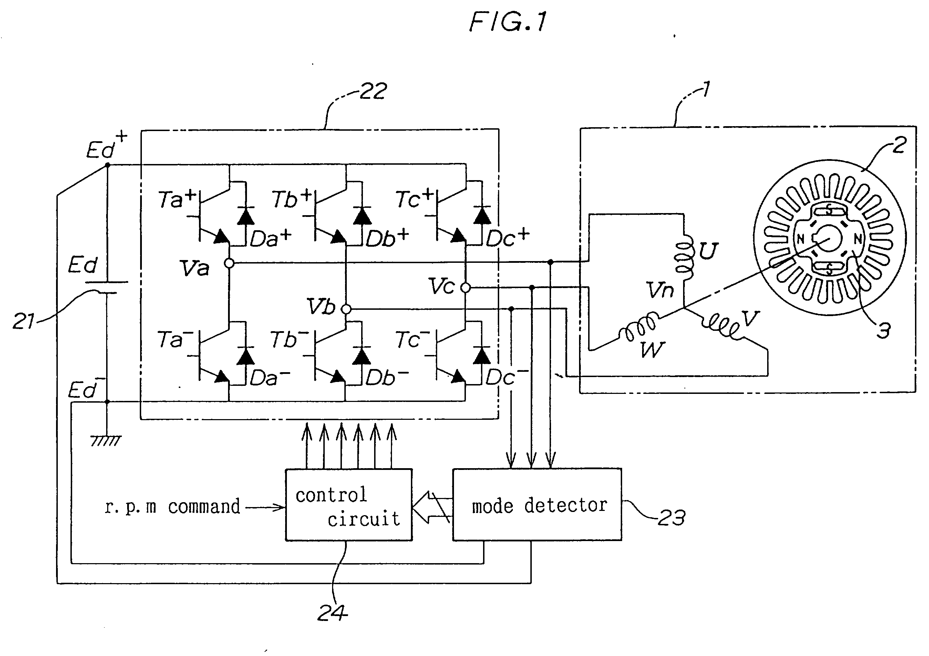

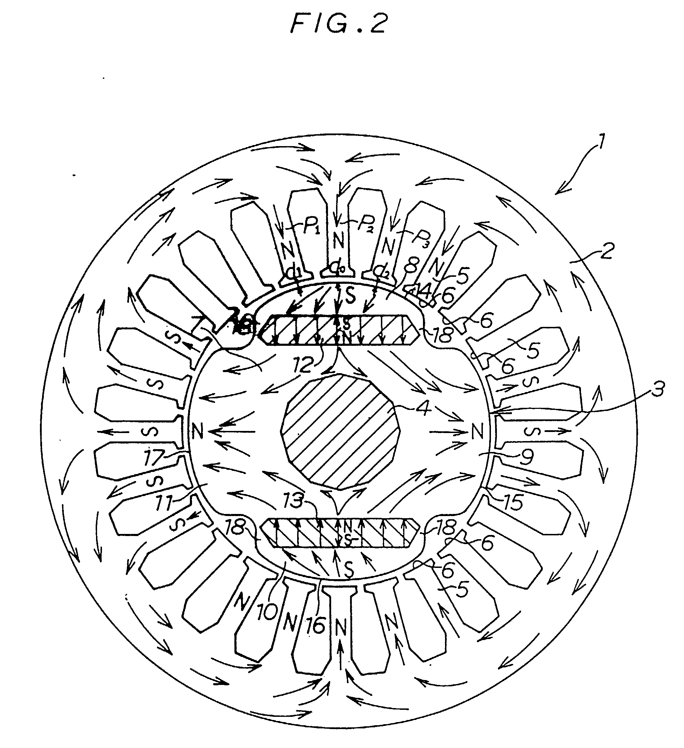

Initially, a brushless DC motor without position sensor which can be controlled by the controller of the invention is described with reference to Figs. 1 and 2.

Referring to Fig. 1, there is shown a general arrangement of a drive control system for the brushless DC motor without position sensor.

The drive control system for the brushless DC motor without position sensor, in addition to the brushless DC motor without position sensor 1 itself, a power supply 21, an inverter 22 having charge of chopper control, a mode detector 23 utilizing a counter electromotive force to detect the position of a rotor 3 and a control circuit 24 serving to control the inverter 22. The brushless DC motor without position sensor 1 comprises a stator 2 and the rotor 3. The brushless DC motor without position sensor 1 in this embodiment is of three-phase inverter driven type and reference symbols U, V, W designate respective coils wound on the stator 2. Reference symbol Vn designates voltage across U, V, W and this voltage is generated selectively across two of these three coils U, V, W upon switching of the inverter 22.

The power supply 21 is in a state ready to supply rectified current. Reference symbol Ed (and Ed⁺, Ed⁻) designates an electromotive force. The inverter 22 comprises feedback diodes Da⁺, Db⁺, Dc⁺, Da⁻, Db⁻, Dc⁻ and transistors Ta⁺, Tb⁺, Tc⁺, Ta⁻, Tb⁻, Tc⁻.

The respective system components operate, as will be described, in rotationally driving the brushless DC motor without position sensor.

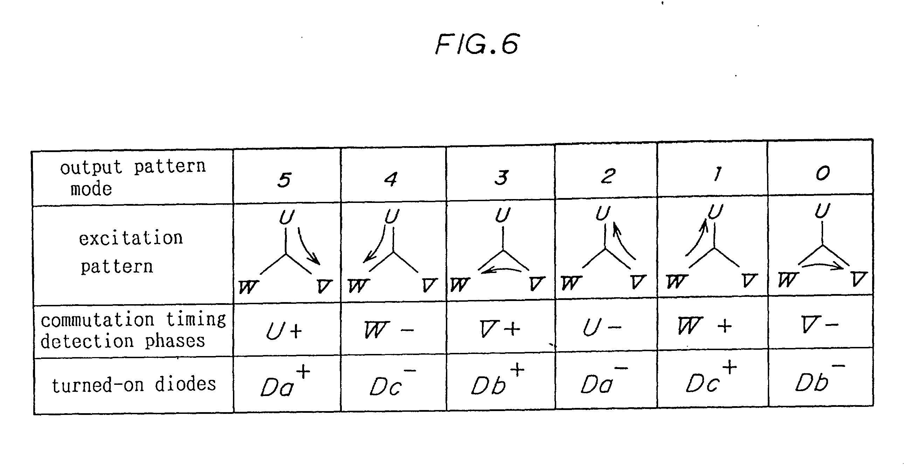

The inverter 22 comprises P-side transistors Ta⁺, Tb⁺, Tc⁺ to which the feedback diodes Da⁺, Db⁺, Dc⁺ are connected, respectively, and N-side transistors Ta⁻, Tb⁻, Tc⁻ to which the feedback diodes Da⁻, Db⁻, Dc⁻ are connected, respectively. Under chopper control by a set of P-side transistor and N-side transistor, two of the three-phase coils are selectively supplied in succession with three-phase direct current to generate magnetic field by which the rotor is rotationally driven. More specifically, output mode patterns of the driving signal are preset to 5 through 0 in accordance with excitation patterns required to maintain normal rotation of the motor 1, as will be described later with reference to Fig. 6, and the motor 1 is rotationally driven under effect of commutation sequenced by a relationship between the respective excitation patterns, on one hand, and commutation timing detection phases and turned-on diodes, on the other hand. The mode detector 23 is connected to the inverter 22 and detects the turned-on states of the respective feedback diodes included by the inverter 22 based on the counter electromotive force generated in the respective coils of the motor 1. The control circuit 24 detects the commutation timing of the respective coils U, V, W based on the detection signal from the mode detector 23 and outputs the driving signal to each transistor of the inverter 22 do that a well timed commutation may occur to the respective coils U, V, W. The chopper control is effected in the inverter 22. Based on the driving signal, the inverter 22 repeats the operation as mentioned above. Such repeated operation causes the rotor 3 to be continuously driven.

The stator 2 and the rotor 3 of the brushless DC motor without position sensor which can be controlled by a controller according to the invention will be described more in detail. Fig. 2 shows the brushless DC motor without position sensor in an enlarged sectional view taken transversely of the rotation axis thereof.

The stator 2 surrounds the rotor 3 and has twenty four stationary magnetic poles 5 projecting inward. Though not shown, these stationary magnetic poles 5 carry coils wound thereon. Stationary magnetic pole surfaces 6 defined by inner ends surfaces of the respective stationary magnetic poles 5 lie at equal distances from the center of a rotatable shaft 4 in conformity with an imaginary cylindrical surface.

The rotor 3 is rotatably supported by the rotatable shaft 4 and includes a yoke 7 comprising a plurality of integrally laminated silicon steel sheets. The yoke 7 has along its outer periphery four rotating magnetic poles 8, 9, 10, 11 projecting radially outward. A pair of field permanent magnets 12, 13 are inserted into bases of the rotating magnetic poles 8, 10, respectively, in parallel to the rotatable shaft 4 with N-poles of these field permanent magnets 12, 13 being positioned face to face. Consequently, the N-poles of the field permanent magnets 12, 13 repulse each other and magnetic flux generated therefrom defines a magnetic path as illustrated by Fig. 2. Specifically, the magnetic flux from the yoke 7 after having passed through the rotating magnetic poles 9, 11 and then enters the yoke again through the rotating magnetic poles 8, 10. Thus, the rotating magnetic poles 8, 10 are magnetized as S-poles while the rotating magnetic poles 9, 11 are magnetized as N-poles.

The rotating magnetic pole surfaces 14, 15, 16, 17 on the outer ends of the respective rotating magnetic poles 8, 9, 10, 11 define curved surfaces swelling radially outward, respectively. In the instant case, circularly curved surfaces defined by the respective rotating magnetic pole surfaces 14, 15, 16, 17 have a curvature larger than that of the imaginary cylindrical surface on which the stationary magnetic pole surfaces 6 lie. In other words, the rotating magnetic pole surfaces 14, 15, 16, 17 are most closely adjacent to the stationary magnetic pole surfaces 6 at circumferential middle points of the respective rotating magnetic pole surfaces.

The magnetic flux generated from the field permanent magnets 12, 13 is concentrated on the circumferentially middle points at which the rotating magnetic pole surfaces are most closely adjacent to the stationary magnetic pole surfaces. Such phenomenon will be explained more in detail in connection with the rotating magnetic pole surface 14.

A distance from the circumferentially middle point of the rotating magnetic pole surface 14 to the corresponding stationary magnetic pole P2 is designated here by do and distances from the stationary magnetic poles P1, P3 adjacent the stationary magnetic pole P2 to the rotating magnetic pole surface 14 are designated by d1 and d2, respectively. The distance do is smaller than both the distance d1 and the distance d2 and, in consequence, the magnetic flux generated from the field permanent magnet 12 reaches the rotating magnetic pole surface 14 mostly via the stationary magnetic pole P2 and thereby a counter electromotive force generated by the rotating magnetic pole surface 14 is concentrated to the stationary magnetic pole P2. This is true also for the other rotating magnetic pole surfaces 15, 16, 17.

In this way, the rotor 3 having the above-mentioned circularly curved rotating magnetic pole surfaces normally generates the counter electromotive force mostly from the circumferentially middle points of the respective rotating magnetic pole surface so that an erronepus position detection of the rotating magnetic poles may be reliably avoided.

As shown, the field permanent magnets 12, 13 in the instant case are configured to have opposite lateral sides slanted so that its S-pole side may have a surface area smaller than that of its N-pole side. Thus, the magnetic flux generated from the permanent magnets is concentrated at circumferentially middle points of their S-pole surfaces and accordingly at circumferentially middle points of the rotating magnetic pole surfaces 14, 16. Bridges 18 defined at the opposite lateral sides of the respective field permanent magnets 12, 13 have relatively large width over most of their extents, since the opposite lateral sides are slanted. With a consequence, the yoke 7 has a relatively high strength such that the yoke 7 might not easily deformed even when an unexpected external force is exerted on the rotating magnetic pole surfaces 14, 16.

While the brushless DC motor has been described on the basis of the specific construction having the circularly curved rotating magnetic pole surfaces each defined by a curvature radius smaller than that defining the stationary magnetic pole surfaces, the curvature of each rotating magnetic pole surface is not limited to the circular arc and any other curvatures, for example, a parabolic curvature as viewed transversely of the rotatable shaft may be employed as far as each rotating magnetic pole surface is so configured to be most spaced from the stationary magnetic pole surface at the circumferentially opposite ends and most closely adjacent thereto at the circumferentially middle point of the rotating magnetic pole surface. The similar effect will be obtained also when each rotating magnetic pole surface is configured so as to most spaced from the stationary magnetic pole surface only at one end in the direction of its rotation and most closely adjacent thereto at the circumferentially middle point.

While the brushless DC motor has been described heretofore on the basis of the specific construction having on the outer periphery of the yoke four rotating magnetic poles which are, in turn, alternately provided with the field permanent magnets inserted thereinto, the rotor is not limited to such construction but may have any even number of rotating magnetic poles and a field permanent magnet may be inserted into each of them. Instead of inserting the field permanent magnets into the yoke, it is also possible to form field permanent magnets each having the rotating magnetic pole surface of the above-mentioned configuration and then to bond them onto the outer periphery of the rotatable shaft.

As will be apparent from the foregoing description, in accordance with the above described DC motor, the rotating magnetic pole surfaces of the rotor present the curvature swelling radially outward so that each rotating magnetic pole surface is most closely adjacent to the stationary magnetic pole surface at a given point on the rotating magnetic pole surface and, accordingly, the counter electromotive force is concentrated at the point. In this manner, this construction provides a brushless DC motor without position sensor wherein the position of each rotating magnetic pole can be precisely detected. According to this construction, the yoke is provided along its outer periphery with even number of the rotating magnetic poles projecting radially outward, these rotating magnetic poles being provided in their bases with the field permanent magnets inserted thereinto in parallel to the rotatable shaft, and the opposite lateral sides of each field permanent magnet are slanted so that the outer magnetic pole surface of the magnet is smaller than its inner magnetic pole surface. Consequently, the magnetic flux generated from the field permanent magnets is concentrated at the circumferentially middle point of each rotating magnetic pole, on one hand, and it is possible to provide the yoke with the adequately wide bridges and to obtain the yoke having a strength sufficiently high to resist the unexpected external force exerted thereon.

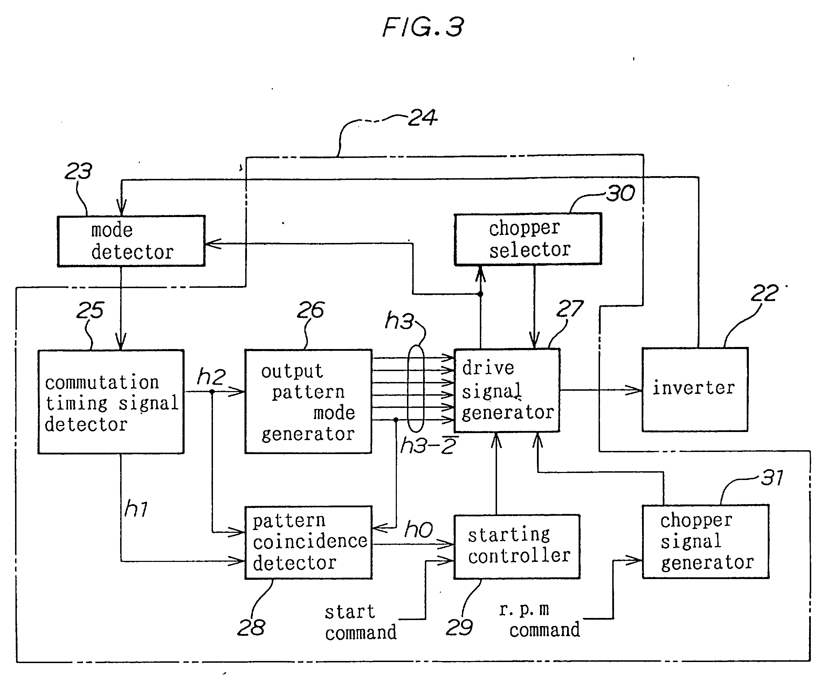

Now, the embodiment of the controller according to the invention will be described with reference to Figs. 3 through 7.

Fig. 3 is a block diagram of a control system constructed according to the invention. A mode detector 23 compares a reference voltage Ed (and Ed⁺, Ed⁻) for forward voltage drop of feedback diodes included by an inverter 22 with terminal voltage of the respective diodes in order to detect the turned-on states of the respective feedback diodes and thereby to detect the excitation pattern modes. In this embodiment, the inverter 22 is of three-phase bipolar type and, as shown in Fig. 6, detects the turned-on states of six phases U⁺, U⁻, V⁺, V⁻, W⁺, W⁻ corresponding to the respective excitation patterns and applies the corresponding detection signals to a control circuit 24 which, in turn, comprises a communication timing signal detector 25, an output pattern mode generator 26, a drive signal generator 27, a pattern coincidence detector 28, a starting controller 29, a chopper selector 30 and a chopper signal generator 31. The commutation timing signal detector 25 is adapted to detect the commutation timing signal based on the output from the mode detector 23 and to generate a clock pulse. The output pattern mode generator 26 is adapted to generate, based on the clock pulse applied from the commutation timing signal detector 25, signals representing six modes as indicated in Fig. 6 and, based on each of these signals, the drive signal generator 27 generates a motor drive signal. The pattern coincidence detector 28 compares a signal h1, one of the six commutation timing signals with a waveform h3-2 of the output pattern mode 2 during a period for which the output pattern mode generator 26 outputs a signal ho to the starting controller to request a restarting. Based on a signal h3 from the output pattern mode generator 26 and a signal from the starting controller 29, the drive signal generator 27 generates a motor drive signal while the chopper selector 30 determines whether the chopper is positive or negative and outputs a corresponding signal to the drive signal generator 27. The signal coming from the chopper signal generator 31 is superposed in the drive signal generator 27 and thereby driving the respective transistors of the inverter 22.

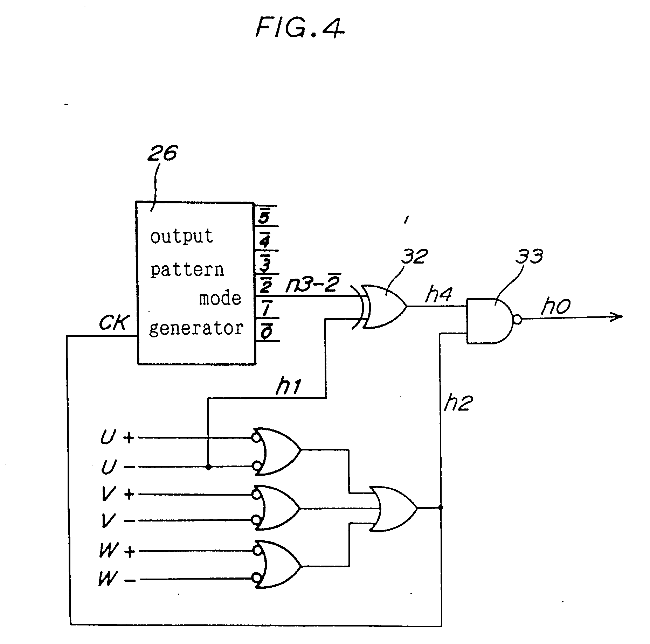

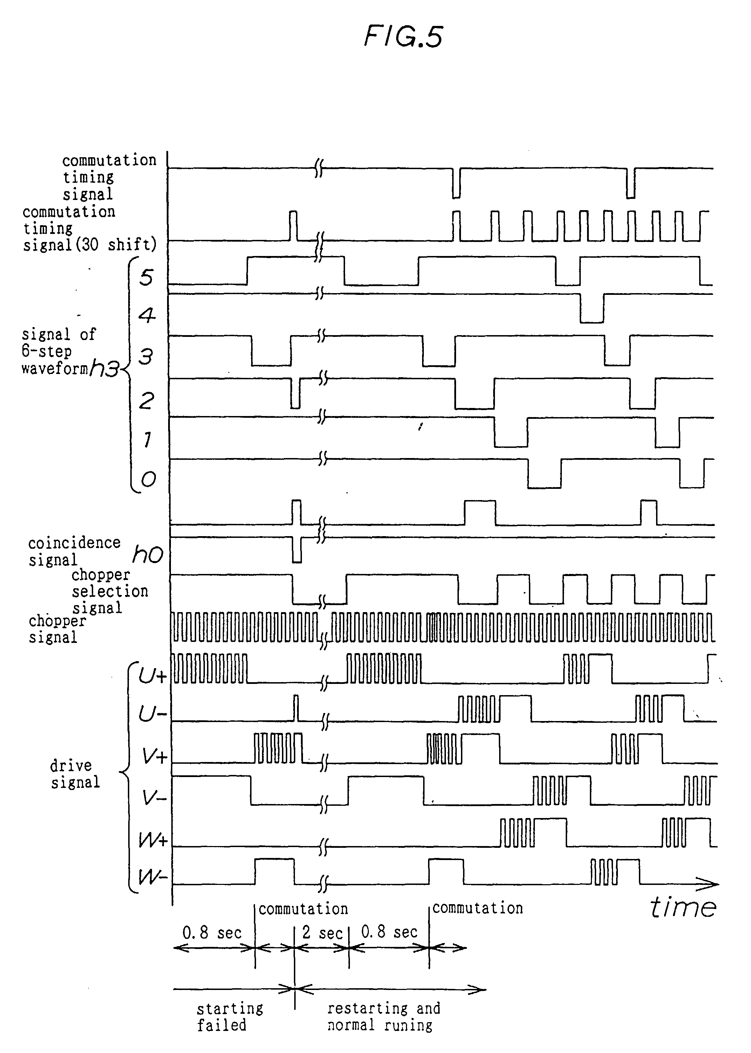

Referring to Fig. 4, the arrangement of the pattern coincidence detector 28 is illustrated. The output pattern mode generator 26 functions as a down-counter adapted to generate the OR signal h2 of the six commutation timing signals in the form of a clock pulse successively on six output terminals 5 through 0. In starting and restarting, the mode 5 is output as an initial mode, then the modes 3, 2, 1, 0 and 5 are output in this order (Regarding such sequence, details will be described later). The output h3-2 of the output pattern mode generator 26 and the commutation timing signal h1 are applied to EX-OR gate 32 of which the output h4, in turn, is applied together/with the OR signal h2 of the six commutation timing signals to an NAND gate 33. Specifically, the output h3-2 of the output pattern mode generator 26 is compared with the commutation timing signal h1 during a period for which the OR signal h2 of the six commutation timing signals is output and, if no coincidence is detected, the output ho of the NAND gate 33 becomes High. This output is applied to the starting controller 29. Correlation of the respective signals is illustrated by a time chart of Fig. 5.

The drive signal generator 27 successively generates the drive signals of the output patterns 5 through 0 corresponding to the excitation patterns as indicated in Fig. 6. More specifically, the output pattern modes, the excitation patterns and the commutation timing signal detection phases are mutually related one another as illustrated in Fig. 5. For example, if the commutation timing signal was detected from U- of the open phase U at the output pattern mode 3, the excitation pattern may be changed over from that corresponding to the mode 3 to that corresponding to the mode 2 at the next output pattern mode 2, i.e., the excitation mode "from V⁺ to U⁻ " in order to continue the normal rotation.

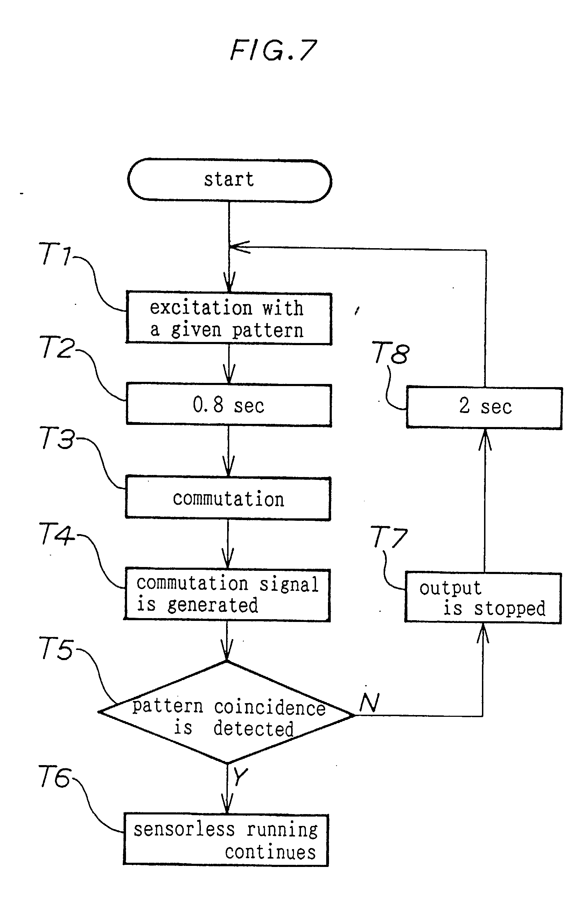

Fig. 7 is a flow chart illustrating a starting sequence in this embodiment. Excitation of a given pattern occurs at a step T1. In this instance, the mode, 5 is selected as the given pattern, i.e., the excitation pattern of "U⁺ phase to V⁻ phase" and 10 to 15A is fed with such output pattern. Such state is maintained for 0.8 sec at a step T2. Consequently, the rotor is rotated in forward or reverse direction by an electrical angle of 180° max, and stopped so that a position of the rotor may be fixed. Now, the output pattern mode is advanced by two and the mode 3 is output. Namely, feed occurs with the excitation pattern "from V⁺ phase to W⁻ phase". As a result, the rotor is started in forward direction according to the excitation pattern being advanced further by electrical angle 120° in forward direction and accelerated. A degree of acceleration depends on the feed current value as well as the loading condition and, in this embodiment, a revolution speed enough to generate the counter electromotive force required for sensorless running can be reached at a moment of starting with a feed current in order of 5A. Thus, at a step T4, the commutation timing signal is generated. So far as the normal rotation is concerned, the commutation timing signal is detected from the feedback diodes of the U⁻ phase which is open during this period. Then, a step T5 determines whether the output pattern mode coincides with the commutation timing signal generation phase or not. More specifically, the step T5 determines whether the signal of the mode 2 coincides with the commutation timing signal from the U⁻ phase or not, since the output pattern mode is advanced by 1 to the mode 2 as the commutation timing signal is generated. If a coincidence is detected, the routine proceeds to a step T6 to continue the sensorless running, and if not detected, the routine is branched to a step T7 to stop the output pattern. After 2 sec has elapsed at a step T8, the routine returns to the step 1, the start point of the open loop, to repeat the starting sequence. The elapsing time at the step T8 is preferably set to a time period at the end of which the rotor stops and, in this embodiment, the time in order of 2 sec is appropriate.

It should be understood that the current value, the elapsing time and the output pattern are specific for this embodiment and it is obviously possible to employ the other values and patterns in the other embodiments.

As will be apparent from the foregoing description, the embodiment of the invention is arranged so that the state in which the motor is rotating can be detected even under a load possibly causing the state during the starting to fluctuate and restarting can be tried by repeating the starting sequence even when the motor is vibrating. In this way, a further reliable starting can be achieved with a relatively simple circuit arrangement.

### Industrial Usefulness:

In spite of having no position-sensor, the brushless DC motor of the invention can precisely detect the rotor position, assure an adequate structural strength and achieve a fine rotation control. In view of these abilities, the brushless DC motor of the invention is suitable for use under a severe condition such as high temperature usually encountered by the scroll type compressor.

## Claims

1. A controller (24, Fig. 1, 2; Fig. 3-7) for a brushless DC motor (1) without position sensor including an inverter (22) adapted to drive the motor under chopper control (30, 31) and utilizing a counter electromotive force generated in stator coils (U, V, W) of respective phases as a rotor (3) is rotated in order to detect a position of the rotor (3) and thereby to generate a commutation signal;
said controller (24) comprising a commutation timing signal generator (25) serving to generate the commutation timing signal, an output pattern mode generator (26) serving to generate output patterns of several types with which said stator coils are excited, a coincidence detector (28) adapted to detect a coincidence between these signals output from said two generators (25; 26) and a starting controller (29) adapted to stop a motor drive output once when no coincidence is detected by said coincidence detector (28) and to cause a restarting.

2. A controller according to claim 1, including said brushless DC motor (1) without position sensor which comprises
a) a stator (2) fixed inside a motor body and a rotor (3) located inside said stator (2) and rotatably supported by said motor body via a rotatable shaft (4);
b) said stator (2) having a plurality of projected stationary magnetic poles (5), inner end surfaces (6) of said stationary magnetic poles (5) lying substantially at equal distances from said rotatable shaft (4) on a circumferential surface;
c) said rotor (3) having even-numbered rotating magnetic poles (8, 9, 10, 11), and outer end surfaces (14, 15, 16, 17) of said rotating magnetic poles (8, 9, 10, 11) having alternately different polarities in the circumferential direction of the rotor (3);
d) each of said outer end surfaces (14, 15, 16, 17) being arranged opposed to several ends of said stationary magnetic pole surfaces (6) at a slight distance (d₀, d₁, d₂) therefrom;
e) said outer end surfaces (14, 15, 16, 17) having a minimum distance (d₀) at a predetermined point in a distance from said stationary magnetic pole surfaces (6) and having greater distances (d₁, d₂) in the rotating direction and counter-rotating direction;
f) field permanent magnets (12, 13) being inserted between said rotating magnetic poles (8, 9, 10, 11) and said rotating shaft (4) in parallel to the rotating shaft (4), and wherein said field permanent magnets (12, 13) are lying opposed in parallel to each other with the rotating shaft (4) being interposed therebetween; and
g) each of said field permanent magnets (12, 13) having its opposite lateral sides slanted, such that the outer magnetic pole surface of the respective field permanent magnet (12, 13) directed outside towards said stationary magnetic poles (5) is smaller than the inner magnetic pole surface thereof directed inside towards said rotating shaft (4).

3. A controller according to claim 2, characterized in that in said brushless DC motor (1) without position sensor, said rotating magnetic poles (8, 9, 10, 11) have their outer end surfaces (8, 9, 10, 11) formed by integrally laminating many silicon steel sheets, such that circularly curved surfaces defined by said respective rotating magnetic pole surfaces (14, 15, 16, 17) have a curvature larger than that of said circumferential surface on which said stationary magnetic pole surfaces (6) lie.

4. A controller according to claim 2, characterized in that in said brushless DC motor (1) without position sensor, said field permanent magnets (12, 13) are arranged in said rotor (3) at bases of said rotating magnetic poles (8, 9, 10, 11) such that they lie on opposite sides diametrically of said rotating shaft (4) facing a respective rotating magnetic pole surface (14; 16) and have their respective corresponding magnetic poles (N) opposed to each other.

5. A controller according to claim 2, characterized in that in said brushless DC motor (1) without position sensor, the smaller outer magnetic pole surface is the N-pole of the field permanent magnet (12, 13) and the larger inner magnetic pole surface is the S-pole of the field permanent magnet (12, 13).

6. A controller according to claim 2, characterized in that in said brushless DC motor (1) without position sensor, said field permanent magnets (12, 13) are arranged in said rotor (3) parallel to said rotatable shaft (4).

## Patentansprüche

1. Steuereinrichtung (24, FIG. 1, 2; FIG. 3-7) für einen bürstenlosen DC-Motor (1) ohne Positionssensor einschließlich eines Umrichters (22), der angepaßt ist, um den Motor mit einer Zerhacker-Steuerung (30, 31) anzusteuern und der eine in den Statorspulen (U, V, W) von jeweiligen Phasen erzeugte elektromotorischen Gegenkraft, wenn ein Rotor (3) gedreht wird, verwendet, um die Position des Rotors (3) zu erfassen und dadurch ein Kommutierungssignal zu erzeugen;
wobei die Steuereinrichtung (24) umfasst: einen Kommutationszeitsteuergenerator (25), der zur Erzeugung des Kommutationszeitsteuersignals dient, einen Ausgangsmuster-Modengenerator (26), der zur Erzeugung von Ausgangsmustern verschiedener Typen, mit welchen die Statorspulen angeregt werden, dient, einen Übereinstimmungs-Detektor (28), der zur Erfassung einer Übereinstimmung zwischen diesen von den beiden Generatoren (25; 26) ausgegebenen Signalen angepaßt ist, und eine Start-Steuereinrichtung (29), die angepaßt ist, einen Motor-Ansteuerausgang dann zu stoppen, wenn keine Übereinstimmung durch den Übereinstimmungsdetektor (28) erfaßt wird, und einen Neustart herbeizuführen.

2. Steuereinrichtung nach Anspruch 1, einschließend den bürstenlosen DC-Motor (1) ohne Positionssensor, der umfasst:
a) einen Stator (2), der im Inneren eines Motorgehäuses fixiert ist, und einen Rotor (3), der innerhalb des Stators (2) gelegen ist und durch das Motorgehäuse über eine drehbare Welle (4) drehbar gelagert ist;
b) wobei der Stator (2) eine Vielzahl von überstehenden stationären Magnetpolen (5) aufweist, wobei innere Endflächen (6) der stationären Magnetpole (5) im Wesentlichen in gleichen Abständen von der drehbaren Welle (4) auf einer Umfangsfläche liegen;
c) wobei der Rotor (3) geradzahlige Drehmagnetpole (8, 9, 10, 11) aufweist, und äußere Endflächen (14, 15, 16, 17) der Drehmagnetpole (8, 9, 10, 11) alternierend unterschiedliche Polaritäten in der Umfangsrichtung des Rotors (3) aufweisen;
d) wobei jede äußere Endfläche (14, 15, 16, 17) mehreren Enden der stationären Magnetpoloberflächen (6) in einem geringfügigen Abstand (d₀, d₁, d₂) davon gegenüberliegend angeordnet sind;
e) wobei die äußeren Endflächen (14, 15, 16, 17) einen minimalen Abstand (d₀) an einem vorbestimmten Punkt in einem Abstand von den stationären Magnetpoloberflächen (6) aufweisen und größere Abstände (d₁, d₂) in der Drehrichtung und Gegendrehrichtung aufweisen;
f) wobei Feld-Permanentmagnete (12, 13) zwischen die Drehmagnetpole (8, 9, 10, 11) und die sich drehende Welle (4) parallel zu der sich drehenden Welle (4) eingesetzt sind, und wobei die Feld-Permanentmagnete (12, 13) parallel einander gegenüberliegend angeordnet sind, wobei die sich drehende Welle (4) dazwischen angeordnet ist; und
g) wobei die gegenüberliegenden lateralen Seiten jedes Feld-Permanentmagneten (12, 13) geneigt sind, so daß die äußere Magnetpoloberfläche des jeweiligen, nach außen auf die stationären Magnetpole (5) hin gerichteten Feld-Permanentmagneten (12, 13) kleiner als dessen nach innen auf die sich drehende Welle (4) hin gerichtete innere Magnetpoloberfläche ist.

3. Steuereinrichtung nach Anspruch 2,
dadurch gekennzeichnet, daß in dem bürstenlosen DC-Motor (1) ohne Positionssensor die sich drehenden Magnetpole (8, 9, 10, 11) ihre äußeren Endoberflächen (8, 9, 10, 11) durch integrales Laminieren vieler Silizium-Stahlplatten ausgebildet aufweisen, so daß kreisförmig gebogene Oberflächen, die durch die entsprechenden sich drehenden Magnetpoloberflächen (14, 15, 16, 17) definiert sind, eine Krümmung größer als die der Umfangsoberfläche, auf welchen die stationären Magnetpoloberflächen (6) liegen, aufweisen.

4. Steuereinrichtung nach Anspruch 2,
dadurch gekennzeichnet, daß in dem bürstenlosen DC-Motor (1) ohne Positionssensor die Feld-Permanentmagnete (12, 13) in dem Rotor (3) an Sockeln der sich drehenden Magnetpole (8, 9, 10, 11) angeordnet sind, so daß sie auf diametral gegenüberliegenden Seiten der sich drehenden Welle (4), auf eine jeweilige, sich drehende Magnetpoloberfläche (14; 16) gerichtet, liegen und ihre jeweiligen Magnetpole (N) einander gegenüberliegend aufweisen.

5. Steuereinrichtung nach Anspruch 2,
dadurch gekennzeichnet, daß in dem bürstenlosen DC-Motor (1) ohne Positionssensor die kleinere äußere Magnetpoloberfläche der N-Pol des Feld-Permanentmagneten (12, 13) ist, und die größere innere Magnetpoloberfläche der S-Pol des Feld-Permanentmagneten (12, 13) ist.

6. Steuereinrichtung nach Anspruch 2,
dadurch gekennzeichnet, daß in dem bürstenlosen DC-Motor (1) ohne Positionssensor die Feld-Permanentmagnete (12, 13) in dem Rotor (3) parallel zu der drehbaren Welle (4) angeordnet sind.

## Revendications

1. Régulateur (24, figures 1, 2 ; figures 3-7) pour moteur (1) à courant continu sans balais et sans détecteur de position comportant un onduleur (22) conçu pour entraîner le moteur selon une commande à découpage (30, 31) et utilisant une force contre-électromotrice générée dans des enroulements de stator (U, V, W) de phases respectives lorsqu'un rotor (3) est mis en rotation afin de détecter une position du rotor (3) et de générer ainsi un signal de commutation ;
ledit régulateur (24) comprenant un générateur (25) de signal de cadencement de commutation servant à générer le signal de cadencement de commutation, un générateur (26) de mode de motif de sortie servant à générer des motifs de sortie de plusieurs types avec lesquels lesdits enroulements de stator sont excités, un détecteur (28) de coïncidence adapté à détecter une coïncidence entre ces signaux fournis en sortie par lesdits deux générateurs (25 ; 26) et un régulateur de démarrage (29) adapté à interrompre une sortie d'entraînement de moteur dès qu'aucune coïncidence n'est détectée par ledit détecteur (28) de coïncidence et à provoquer un redémarrage.

2. Régulateur selon la revendication 1, comportant ledit moteur (1) à courant continu sans balais et sans capteur de position, comprenant :
a) un stator (2) fixé à l'intérieur d'un corps de moteur et un rotor (3) situé à l'intérieur dudit stator (2) et supporté de façon rotative par ledit corps de moteur au moyen d'un arbre (4) rotatif ;
b) ledit stator (2) ayant une pluralité de pôles (5) magnétiques stationnaires faisant saillie, des surfaces (6) d'extrémité intérieures desdits pôles (5) magnétiques stationnaires se situant à des distances sensiblement égales dudit arbre (4) rotatif sur une surface circonférentielle ;
c) ledit rotor (3) ayant des pôles (8, 9, 10, 11) magnétiques rotatifs en nombre pair, et les surfaces (14, 15, 16, 17) d'extrémité extérieures desdits pôles (8, 9, 10, 11) magnétiques rotatifs ayant des polarités différentes en alternance dans la direction circonférentielle du rotor (3) ;
d) chacune desdites surfaces (14, 15, 16, 17) d'extrémité extérieures étant agencées de façon opposée à plusieurs extrémités desdites surfaces (6) des pôles magnétiques stationnaires à une faible distance (d₀, d₁, d₂) de celles-ci ;
e) lesdites surfaces (14, 15, 16, 17) d'extrémité extérieures ayant une distance (d₀) minimale en un point prédéterminé à une distance desdites surfaces (6) des pôles magnétiques stationnaires et ayant des distances (d₁, d₂) supérieures dans la direction de rotation et la direction de contre-rotation ;
f) des électro-aimants (12, 13) permanents étant insérés entre lesdits pôles (8, 9, 10, 11) magnétiques rotatifs et ledit arbre (4) rotatif parallèlement à l'arbre (4) rotatif, et dans lequel lesdits électro-aimants (12, 13) permanents sont disposés de façon opposée et parallèlement les uns aux autres, l'arbre (4) rotatif étant interposé entre eux ; et
g) chacun desdits électro-aimants (12, 13) permanents ayant ses faces latérales opposées inclinées, de telle sorte que la surface extérieure des pôles magnétiques de l'électro-aimant (12, 13) permanent respectif dirigé vers l'extérieur et vers lesdits pôles (5) magnétiques stationnaires soit plus petite que la surface de son pôle magnétique intérieure, qui est dirigée vers l'intérieur et vers ledit arbre (4) rotatif.

3. Régulateur selon la revendication 2, caractérisé en ce que, dans ledit moteur (1) à courant continu sans balais et sans détecteur de position, lesdits pôles (8, 9, 10, 11) magnétiques rotatifs ont leurs surfaces (8, 9, 10, 11) d'extrémité extérieures formées par stratification intégrale d'un grand nombre de feuilles d'acier au silicium, de telle façon que des surfaces incurvées circulairement définies par lesdites surfaces (14, 15, 16, 17) de pôles magnétiques rotatifs respectives aient une courbure supérieure à celle de ladite surface circonférentielle sur laquelle se situent lesdites surfaces (6) des pôles magnétiques stationnaires.

4. Régulateur selon la revendication 2, caractérisé en ce que, dans ledit moteur (1) à courant continu sans balais et sans détecteur de position, lesdits électro-aimants (12, 13) permanents sont agencés dans ledit rotor (3) aux bases desdits pôles (8, 9, 10, 11) magnétiques rotatifs de façon qu'ils se situent sur des faces diamétralement opposées dudit arbre (4) rotatif en face d'une surface (14 ; 16) respective d'un pôle magnétique rotatif et qu'ils aient leurs pôles magnétiques (N) correspondants respectifs opposés les uns aux autres.

5. Régulateur selon la revendication 2, caractérisé en ce que, dans ledit moteur (1) à courant continu sans balais et sans détecteur de position, la surface de pôle magnétique extérieure la plus petite est le pôle N de l'électro-aimant (12, 13) permanent et la surface la plus grande de pôle magnétique intérieure est le pôle S de l'électro-aimant (12, 13) permanent.

6. Régulateur selon la revendication 2, caractérisé en ce que, dans ledit moteur (1) à courant continu sans balais et sans détecteur de position, lesdits électro-aimants (12, 13) permanents sont agencés dans ledit rotor (3) parallèlement audit arbre (4) rotatif.
